# EUROPÄISCHE PATENTSCHRIFT

(11) **EP 4 206 003 B1**
(45) Veröffentlichungstag und Bekanntmachung des Hinweises auf die Patenterteilung: **19.03.2025**
(21) Anmeldenummer: 22211286.4
(22) Anmeldetag: 05.12.2022
(51) Int. Cl.: B60C 23/04

(54) **VERFAHREN FÜR EINE ZUORDNUNG VON REIFENMODULEN ZU UNTERSCHIEDLICHEN REIFENPOSITIONEN AN EINEM FAHRZEUG**
METHOD FOR ASSIGNING TYRE MODULES TO DIFFERENT TYRE POSITIONS ON A VEHICLE
PROCÉDÉ D'ATTRIBUTION DE MODULES DE PNEU À DIFFÉRENTES POSITIONS DE PNEU SUR UN VÉHICULE

(30) Priorität: 03.01.2022 DE 102022200013
(43) Veröffentlichungstag der Anmeldung: 05.07.2023
(73) Patentinhaber: Continental Reifen Deutschland GmbH, 30175 Hannover (DE)
(72) Erfinder: Lehmann, Jörg, Dr., 30165 Hannover (DE); Sahlmüller, Baldo, Dr., 30165 Hannover (DE); James, Akhil, 30165 Hannover (DE); von Janta Lipinski, Lukas, 30165 Hannover (DE); Nettelmann, Marc, 30165 Hannover (DE)
(74) Vertreter: Continental Corporation

(56) Entgegenhaltungen:
- EP-A1- 3 281 810
- DE-A1- 102011 004 561
- DE-A1- 102021 203 138
- US-A1- 2019 126 694

## Beschreibung

Die Erfindung betrifft ein Verfahren für eine Zuordnung von Reifenmodulen zu unterschiedlichen Reifenpositionen an einem Fahrzeug.

Es ist bekannt, bei Fahrzeugreifen eine Reifendrucküberwachung einzusetzen, um einen Druckverlust sicher zu detektieren.

Ein Problem bei der Reifendrucküberwachung von Nutzfahrzeugen besteht darin, dass jeder Fahrzeugreifen mit einem Reifenmodul für eine Druckkontrolle versehen ist und jedes Reifenmodul einer Reifenposition am Fahrzeug zugeordnet werden muss.

Die DE 102011004561 A1, DE 102021203138 A1, EP 3281810 A1 und US 2019126694 A1 offenbaren bekannte Zuordnungsverfahren für Reifenmodule.

Der Erfindung lag die Aufgabe zugrunde, ein Verfahren bereitzustellen, mit dem auf einfache Weise und mit einer hohen Genauigkeit jedes Reifenmodul der richtigen Reifenposition am Fahrzeug zugeordnet werden kann.

Gelöst wird die Aufgabe durch ein Verfahren mit den folgenden Schritten:
a) Bereitstellen von Fahrzeugreifen mit Reifenmodulen,
   wobei die Reifenmodule zumindest einen Beschleunigungssensor aufweisen, die auf der Reifeninnenseite angeordnet sind,
b) Messung von radialen Beschleunigungswerten mit den an den Reifenmodulen angeordneten Beschleunigungssensoren,
   wobei sich die Fahrzeugreifen des Fahrzeuges im Stillstand befinden,
c) Zuordnen des Beschleunigungswertes zu einer Winkelposition des Reifenmoduls im Fahrzeugreifen,
d) Zuordnen der ermittelten Winkelposition zu einer Reifenmodul-Markierung auf der Seitenwand des Fahrzeugreifens,

wobei mit der Reifenmodul-Markierung die Reifenmodul-Position im Fahrzeugreifen angezeigt wird und
wobei bei einer Übereinstimmung von ermittelter Winkelposition und Reifenmodulmarkierung auf der Seitenwand eine Zuordnung des Reifenmoduls zu der jeweiligen Reifenposition am Fahrzeug erfolgt.

Ein Vorteil der Erfindung ist insbesondere darin zu sehen, dass durch das erfindungsgemäße Verfahren eine einfache und sichere Zuordnung der Reifenmodule zu den einzelnen Reifenpositionen am Fahrzeug erfolgt.

Die radialen Beschleunigungswerte der einzelnen Reifenmodule lassen sich im Stillstand des Fahrzeuges einfach messen und auswerten. Außerdem ist die Reifenmodulmarkierung auf der Seitenwand relativ einfach zu identifizieren. Mit dem neuen Verfahren lässt sich dadurch die Zuordnung der Reifenmodule zu den einzelnen Reifenpositionen einfach und mit einer hohen Geschwindigkeit durchführen.

In einer vorteilhaften Weiterbildung der Erfindung ist vorgesehen, dass die Seitenwand des Fahrzeugreifens mit der Reifenmodulmarkierung mit einer Kamera aufgenommen und die Reifenmodulmarkierung auf der Seitenwand mit einer Bildverarbeitung automatisiert identifiziert wird.

Dadurch muss der Bediener nicht mehr die Reifenmodulmarkierung auf der Seitenwand suchen.

In einer weiteren vorteilhaften Weiterbildung der Erfindung ist vorgesehen, dass mit der Bildverarbeitung und der identifizierten Reifenmodulmarkierung die Winkelposition des Reifenmoduls im Fahrzeugreifen bestimmt wird.

Dadurch lässt sich die Winkelposition des Reifenmoduls im Fahrzeugreifen schnell erfassen.

In einer weiteren vorteilhaften Weiterbildung der Erfindung ist vorgesehen, dass die Seitenwand mit einer Kamera von einem Smartphone oder Tablet aufgenommen wird und die Bildverarbeitung mit einer auf dem Smartphone oder Tablet installierten Software erfolgt.

Dadurch ist für die Zuordnung der Reifenposition keine weitere Hardware erforderlich.

**In** einer weiteren vorteilhaften Weiterbildung der Erfindung ist vorgesehen, dass die Reifenmodulmarkierung eine DOT-Kennzeichnung auf der Seitenwand ist, wobei das Reifenmodul in einer bestimmten Winkelposition zur DOT-Kennzeichnung im Fahrzeugreifen angeordnet ist.

Dadurch muss auf der Seitenwand des Fahrzeuges keine zusätzliche Markierung aufgebracht werden. Bei der Montage des Reifenmoduls im Fahrzeugreifen wird gleichzeitig die relative Position des Reifenmoduls zur DOT-Kennzeichnung erfasst und abgespeichert.

In einer weiteren vorteilhaften Weiterbildung der Erfindung ist vorgesehen, dass die radialen Beschleunigungswerte von den Reifenmodulen über eine Bluetooth-Verbindung zu einem Smartphone übertragen werden.

Mit der Bluetooth-Verbindung lässt sich eine sichere Datenübertragung durchführen.

In einer weiteren vorteilhaften Weiterbildung der Erfindung ist vorgesehen, dass die Auswertung der radialen Beschleunigungswerte von den Reifenmodulen mit einer auf dem Smartphone installierten Software ausgewertet werden.

Dadurch kann eine schnelle Auswertung der Signale erfolgen.

In einer weiteren vorteilhaften Weiterbildung der Erfindung ist vorgesehen, dass mit einer Software eine automatisierte Zuordnung der Reifenmodule zu den jeweiligen Reifenpositionen am Fahrzeug erfolgt.

Dadurch kann eine schnelle Zuordnung der jeweiligen Reifenmodule zu den einzelnen Reifenpositionen am Fahrzeug erfolgen.

In einer weiteren vorteilhaften Weiterbildung der Erfindung ist vorgesehen, dass die Zuordnung der Reifenpositionen durch eine Auswertung der Feldstärke der vom jeweiligen Reifenmodul empfangen Signale unterstützt wird.

Mit der Auswertung der Feldstärke lässt sich insbesondere ein Maß für den Abstand zwischen dem Reifenmodul oder dem Empfänger ermitteln. Hierdurch kann zwischen näheren und weiter entfernten Reifenmodulen unterschieden werden. Anschließend lässt sich mit der Auswertung eingrenzen, welches Reifenmodul zu welcher Reifenposition zugeordnet werden muss.

Anhand eines Ausführungsbeispiels wird die Erfindung im Folgenden näher beschrieben.

Es zeigt:

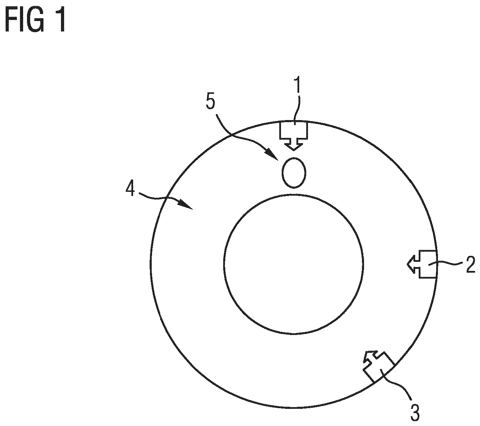

- Fig. 1:: Einen Fahrzeugreifen in der Seitenansicht.

Die Figur 1 zeigt ein Ausführungsbeispiel.

Die Figur zeigt schematisch einen Fahrzeugreifen mit einer Seitenwand 4 in einer Seitenansicht. Auf der Reifeninnenseite des Fahrzeugreifens ist an einer Position ein Reifenmodul 1 angeordnet. In den Reifenmodulen sind eine Vielzahl von Sensoren angeordnet, u.a. zumindest ein Reifendrucksensor und ein Beschleunigungssensor. Der Beschleunigungssensor von Reifenmodul 1 misst im Stillstand des Fahrzeuges einen Beschleunigungswert von -1 g. Das Reifenmodul 1 befindet sich, bezogen auf eine Uhr in einer Winkelposition von 12.00 Uhr. Das Reifenmodul 1 sendet den radialen Beschleunigungswert an das Smartphone des Bedieners. Der Beschleunigungswert wird anschließend auf dem Smartphone des Bedieners angezeigt. Da die Position des Reifenmoduls im Fahrzeugreifen von außen nicht sichtbar ist, befindet sich auf der Seitenwand eine Reifenmodulmarkierung 5. Bei der Reifenmodulmarkierung kann es sich beispielsweise um die DOT-Kennzeichnung des Fahrzeugreifens handeln. Der Bediener kann von außen mit der Reifenmodulmarkierung erkennen, an welcher Winkelposition das Reifenmodul sich im Fahrzeugreifen befindet. Bei diesem Ausführungsbeispiel zeigt die Reifenmodulmarkierung 5 an, dass sich das Reifenmodul im Fahrzeugreifen auf 12:00 Uhr befindet. Für den Fall, dass auf dem Smartphone der radiale Beschleunigungswert von -1 g angezeigt wird, kann eine eindeutige Zuordnung des Reifenmoduls zu der jeweiligen Reifenposition erfolgen. Die Reifenmodule 2 und 3 zeigen die Winkelposition der Reifenmodule in benachbarten Fahrzeugreifen. Das Reifenmodul 1 ist z.B. an der Hinterachse auf der linken Seite des Fahrzeuges angeordnet, wobei das Reifenmodul 2 beispielsweise im Fahrzeugreifen 2 an der Vorderachse auf der linken Seite angeordnet ist. Die Beschleunigungswerte der Reifenmodule 2 und 3 werden ebenfalls über eine Bluetooth-Verbindung an das Smartphone übermittelt.

Das Reifenmodul 2 am Fahrzeugreifen 2 befindet sich auf einer Winkelposition von 3:00 Uhr. In dieser Winkelposition wird eine radiale Beschleunigung von 0 g gemessen.

Das Reifenmodul 3 am Fahrzeugreifen 3 befindet sich auf der Winkelposition von ca. 5:00 Uhr. Bei diesem Reifenmodul 3 wird eine radiale Beschleunigung von ca. 0,7 g gemessen. Mit der Messung des Beschleunigungswertes lässt sich immer feststellen, in welcher Winkelposition sich das jeweilige Reifenmodul im Fahrzeugreifen befindet. Bei einer automatisierten Ausführungsform wird eine entsprechende Software auf einem Smartphone installiert. Der Bediener macht eine Fotoaufnahme von der Seitenwand des Fahrzeugreifens und anschließend wird automatisiert die Reifenmodulmarkierung auf der Seitenwand erfasst. Anschließend werden die radialen Beschleunigungswerte von den jeweiligen Reifenmodulen erfasst. Die Zuordnung der jeweiligen Reifenmodule zu den einzelnen Reifenpositionen erfolgt mit Hilfe der Software auf dem Smartphone.

### Bezugszeichenliste

- 1: Reifenmodul 1 an Fahrzeugreifen 1 (Winkelposition: 12 Uhr, - 1g)
- 2: Reifenmodul 2 an Fahrzeugreifen 2 (Winkelposition: 3 Uhr, 0g)
- 3: Reifenmodul 3 an Fahrzeugreifen 3 (Winkelposition: 5 Uhr, 0,7g)
- 4: Seitenwand
- 5: Reifenmodulmarkierung 1 auf der Seitenwand von Fahrzeugreifen 1

## Patentansprüche

1. Verfahren für eine Zuordnung von Reifenmodulen (1,2,3) zu unterschiedlichen Reifenpositionen an einem Fahrzeug mit folgenden Schritten:
a) Bereitstellen von Fahrzeugreifen mit Reifenmodulen (1,2,3), wobei die Reifenmodule (1,2,3) zumindest einen Beschleunigungssensor aufweisen und auf der Reifeninnenseite angeordnet sind,
b) Messung von radialen Beschleunigungswerten mit den an den Reifenmodulen (1,2,3) angeordneten Beschleunigungssensoren, wobei sich die Fahrzeugreifen des Fahrzeuges im Stillstand befinden,
c) Zuordnen des Beschleunigungswertes zu einer Winkelposition des Reifenmoduls (1,2,3) im Fahrzeugreifen,
**dadurch gekennzeichnet**, dassd) Zuordnen der ermittelten Winkelposition zu einer Reifenmodul-Markierung (5) auf der Seitenwand (4) des Fahrzeugreifens,
wobei mit der Reifenmodul-Markierung (5) die Reifenmodul-Position im Fahrzeugreifen angezeigt wird und
wobei bei einer Übereinstimmung von ermittelter Winkelposition und Reifenmodulmarkierung (5) auf der Seitenwand (4) eine Zuordnung des Reifenmoduls (1,2,3) zu der jeweiligen Reifenposition am Fahrzeug erfolgt.

2. Verfahren nach Anspruch 1,
**dadurch gekennzeichnet, dass**
die Seitenwand (4) des Fahrzeugreifens mit der Reifenmodulmarkierung (5) mit einer Kamera aufgenommen und die Reifenmodulmarkierung (5) auf der Seitenwand (4) mit einer Bildverarbeitung automatisiert identifiziert wird.

3. Verfahren nach einem der vorhergehenden Ansprüche,
**dadurch gekennzeichnet, dass**
mit der Bildverarbeitung und der identifizierten Reifenmodulmarkierung (5) die Winkelposition des Reifenmoduls (1,2,3) im Fahrzeugreifen bestimmt wird.

4. Verfahren nach einem der vorhergehenden Ansprüche,
**dadurch gekennzeichnet, dass**
die Seitenwand (4) mit einer Kamera von einem Smartphone aufgenommen wird und die Bildverarbeitung mit einer auf dem Smartphone installierten Software erfolgt.

5. Verfahren nach einem der vorhergehenden Ansprüche,
**dadurch gekennzeichnet, dass**
die Reifenmodulmarkierung (5) eine DOT-Kennzeichnung auf der Seitenwand (4) ist, wobei das Reifenmodul (1,2,3) in einer bestimmten Winkelposition zur DOT-Kennzeichnung im Fahrzeugreifen angeordnet ist.

6. Verfahren nach einem der vorhergehenden Ansprüche,
**dadurch gekennzeichnet, dass**
die radialen Beschleunigungswerte von den Reifenmodulen (1,2,3) über eine Bluetooth-Verbindung zu einem Smartphone übertragen werden.

7. Verfahren nach einem der vorhergehenden Ansprüche,
**dadurch gekennzeichnet, dass**
die Auswertung der radialen Beschleunigungswerte von den Reifenmodulen (1,2,3) mit einer auf dem Smartphone installierten Software ausgewertet werden.

8. Verfahren nach einem der vorhergehenden Ansprüche,
**dadurch gekennzeichnet, dass**
mit einer Software eine automatisierte Zuordnung der Reifenmodule (1,2,3) zu den jeweiligen Reifenpositionen am Fahrzeug erfolgt.

9. Verfahren nach einem der vorhergehenden Ansprüche,
**dadurch gekennzeichnet, dass**
die Zuordnung der Reifenpositionen durch eine Auswertung der Feldstärke der vom jeweiligen Reifenmodul (1,2,3) empfangenen Signale unterstützt wird.

## Claims

1. Method for assigning tyre modules (1, 2, 3) to different tyre positions on a vehicle, with the following steps:
a) providing vehicle tyres comprising tyre modules (1, 2, 3),
wherein the tyre modules (1, 2, 3) have at least one acceleration sensor and are arranged on the inner side of the tyre,
b) measuring radial acceleration values with the acceleration sensors arranged on the tyre modules (1, 2, 3),
wherein the vehicle tyres of the vehicle are at a standstill,
c) assigning the acceleration value to an angular position of the tyre module (1, 2, 3) in the vehicle tyre,
**characterized by**
d) assigning the angular position ascertained to a tyre-module marking (5) on the sidewall (4) of the vehicle tyre,
wherein the tyre-module position in the vehicle tyre is indicated by the tyre-module marking (5) and
wherein, if the angular position ascertained and the tyre-module marking (5) on the sidewall (4) match, an assignment of the tyre module (1, 2, 3) to the respective tyre position on the vehicle is performed.

2. Method according to Claim 1,
**characterized in that**
the sidewall (4) of the vehicle tyre with the tyre-module marking (5) is recorded with a camera and the tyre-module marking (5) on the sidewall (4) is identified in an automated manner with image processing.

3. Method according to one of the preceding claims,
**characterized in that**
with the image processing and the identified tyre-module marking (5), the angular position of the tyre module (1, 2, 3) in the vehicle tyre is determined.

4. Method according to one of the preceding claims,
**characterized in that**
the sidewall (4) is recorded by a camera of a smartphone and the image processing is performed by software installed on the smartphone.

5. Method according to one of the preceding claims,
**characterized in that**
the tyre-module marking (5) is a DOT code on the sidewall (4), wherein the tyre module (1, 2, 3) is arranged in a specific angular position in relation to the DOT code in the vehicle tyre.

6. Method according to one of the preceding claims,
**characterized in that**
the radial acceleration values are transmitted from the tyre modules (1, 2, 3) via a Bluetooth connection to a smartphone.

7. Method according to one of the preceding claims,
**characterized in that**
the evaluation of the radial acceleration values from the tyre modules (1, 2, 3) is performed by software installed on the smartphone.

8. Method according to one of the preceding claims,
**characterized in that**
an automated assignment of the tyre modules (1, 2, 3) to the respective tyre positions on the vehicle is performed by software.

9. Method according to one of the preceding claims,
**characterized in that**
the assignment of the tyre positions is assisted by an evaluation of the field strength of the signals received from the respective tyre module (1, 2, 3).

## Revendications

1. Procédé pour une association de modules de pneus (1, 2, 3) à différentes positions de pneus sur un véhicule, avec les étapes suivantes :
a) la fourniture de pneus de véhicule avec des modules de pneus (1, 2, 3), les modules de pneu (1, 2, 3) présentant au moins un capteur d'accélération et étant agencés sur le côté intérieur du pneu,
b) la mesure de valeurs d'accélération radiale avec les capteurs d'accélération agencés sur les modules de pneus (1, 2, 3),
les pneus de véhicule du véhicule étant à l'arrêt,
c) l'association de la valeur d'accélération à une position angulaire du module de pneu (1, 2, 3) dans le pneu de véhicule,
**caractérisé par**
d) l'association de la position angulaire déterminée à un marquage de module de pneu (5) sur la paroi latérale (4) du pneu de véhicule,
le marquage de module de pneu (5) indiquant la position du module de pneu dans le pneu de véhicule, et
en cas de concordance entre la position angulaire déterminée et le marquage de module de pneu (5) sur la paroi latérale (4), une association du module de pneu (1, 2, 3) à la position de pneu respective sur le véhicule étant effectuée.

2. Procédé selon la revendication 1,
**caractérisé en ce que**
la paroi latérale (4) du pneu de véhicule avec le marquage de module de pneu (5) est capturée avec une caméra et le marquage de module de pneu (5) sur la paroi latérale (4) est identifié de manière automatisée avec un traitement d'image.

3. Procédé selon l'une quelconque des revendications précédentes,
**caractérisé en ce que**
le traitement d'image et le marquage de module de pneu identifié (5) permettent de déterminer la position angulaire du module de pneu (1, 2, 3) dans le pneu de véhicule.

4. Procédé selon l'une quelconque des revendications précédentes,
**caractérisé en ce que**
la paroi latérale (4) est capturée par une caméra à partir d'un smartphone et le traitement d'image est effectué avec un logiciel installé sur le smartphone.

5. Procédé selon l'une quelconque des revendications précédentes,
**caractérisé en ce que**
le marquage de module de pneu (5) est un signe DOT sur la paroi latérale (4), le module de pneu (1, 2, 3) étant agencé dans une position angulaire déterminée par rapport au signe DOT dans le pneu de véhicule.

6. Procédé selon l'une quelconque des revendications précédentes,
**caractérisé en ce que**
les valeurs d'accélération radiale sont transmises des modules de pneus (1, 2, 3) à un smartphone via une connexion Bluetooth.

7. Procédé selon l'une quelconque des revendications précédentes,
**caractérisé en ce que**
l'évaluation des valeurs d'accélération radiale provenant des modules de pneus (1, 2, 3) est effectuée à l'aide d'un logiciel installé sur le smartphone.

8. Procédé selon l'une quelconque des revendications précédentes,
**caractérisé en ce que**
une association automatisée des modules de pneus (1, 2, 3) aux positions de pneus respectives sur le véhicule est effectuée à l'aide d'un logiciel.

9. Procédé selon l'une quelconque des revendications précédentes,
**caractérisé en ce que**
l'association des positions de pneus est assistée par une évaluation de l'intensité du champ des signaux reçus par le module de pneus respectif (1, 2, 3).
